Europäisches Patentamt

European Patent Office

Office européen des brevets

(11) Publication number: 0 084 294
B1

# EUROPEAN PATENT SPECIFICATION

(45) Date of publication of patent specification: 19.03.86

(21) Application number: 82830199.4

(22) Date of filing: 07.07.82

(51) Int. Cl.⁴: **B 60 T 17/08, B 61 H 15/00, B 61 H 5/00, F 16 D 65/56**

(54) Actuator for controlling the brakes of railway vehicles and the like, incorporating an automatic device for taking up play.

(30) Priority: 15.01.82 IT 6704182

(43) Date of publication of application:
27.07.83 Bulletin 83/30

(45) Publication of the grant of the patent:
19.03.86 Bulletin 86/12

(84) Designated Contracting States:
AT BE CH DE FR GB IT LI LU NL SE

(56) References cited:
FR-A-2 291 067
GB-A-1 503 080
GB-A-1 598 906
GB-A-1 598 907

(73) Proprietor: WABCO WESTINGHOUSE
COMPAGNIA FRENI S.p.A.
Via Pier Carlo Boggio 20
I-10138 Torino (IT)

(72) Inventor: Casalone, Enrico
Strada San Mauro 139
I-10156 Torino (IT)
Inventor: Barberis, Dario
Via D'Arborea 8
I-10137 Torino (IT)

(74) Representative: Jacobacci, Filippo et al
c/o JACOBACCI-CASETTA & PERANI S.n.c. Via
Alfieri, 17
I-10121 Torino (IT)

Courier Press, Leamington Spa, England.

## Description

The present invention relates to actuators for controlling the brakes of railway vehicles or the like.

More particularly, the invention concerns an actuator comprising a tubular casing defining at one end a cylinder in which is slidable, under the effect of a fluid under pressure and against the action of resilient return means, a piston carrying a hollow shaft in which a rod for operating the brake means is coupled axially, and an automatic device for taking up play which is associated with the rod and acts so as to vary the axial position of the rod relative to the hollow shaft following wear of the brake means, and wherein the hollow shaft and the rod are locked against rotation relative to the tubular casing; the rod is threaded externally and an internally threaded annular stop member is engaged thereon with a frontal coupling part cooperating with a complementary frontal coupling part of the hollow shaft, to lock the stop member against rotation with the hollow shaft, resilient return means being provided to restore the engagement between the coupling parts, by screwing the stop member on the threaded rod, following axial separation of the coupling parts.

An actuator of the above mentioned type is known in the art from GB—A—1503080.

The object of the present invention is to provide an actuator of the aforesaid type, which is simple, practical and is constituted by a smaller number of parts and is therefore particularly simple and economical to manufacture.

In order to achieve this object, the invention provides a control actuator for brakes of railway vehicles; characterised in that:

— an annular friction member is interposed between the tubular casing and the threaded rod, which acts on the threaded rod and is rigid therewith for sliding relative to the tubular casing through a predetermined length of travel during the operation of the actuator; stop means carried by the casing being prearranged to stop the annular friction member of the end of the predetermined length of travel and allow possible axial sliding of the threaded rod relative to the hollow shaft, and

— manually-operable releasing means are associated in a way known per se (from GB—A—1598907) with the free end of the rod to free the latter for rotation.

The actuator according to the invention may be provided with a spring-operated device which acts on the piston to effect parking or emergency braking automatically.

The invention will now be described in detail with reference to the appended drawings, provided purely by way of non-limiting example, in which:

Figure 1 is a schematic partially-sectioned elevation view illustrating a control actuator according to the invention in its condition of use;

Figure 2 is a longitudinal partial sectional view taken, on an enlarged scale, along the line II—II of Figure 1;

Figure 3 is an exploded perspective view of a detail of Figure 2, and

Figure 4 illustrates a variant of one part of Figure 2.

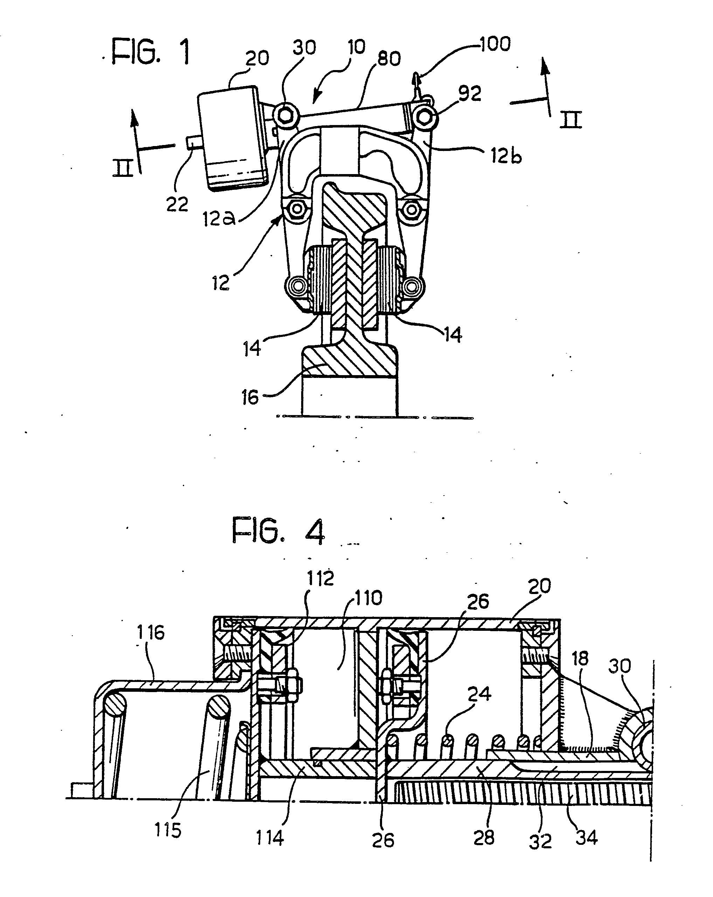

Referring initially to Figure 1, by 10 is generally indicated a pneumatic actuator for controlling a brake caliper 12 carrying a pair of friction shoes 14 which cooperate with a wheel 16 of a railway vehicle or the like.

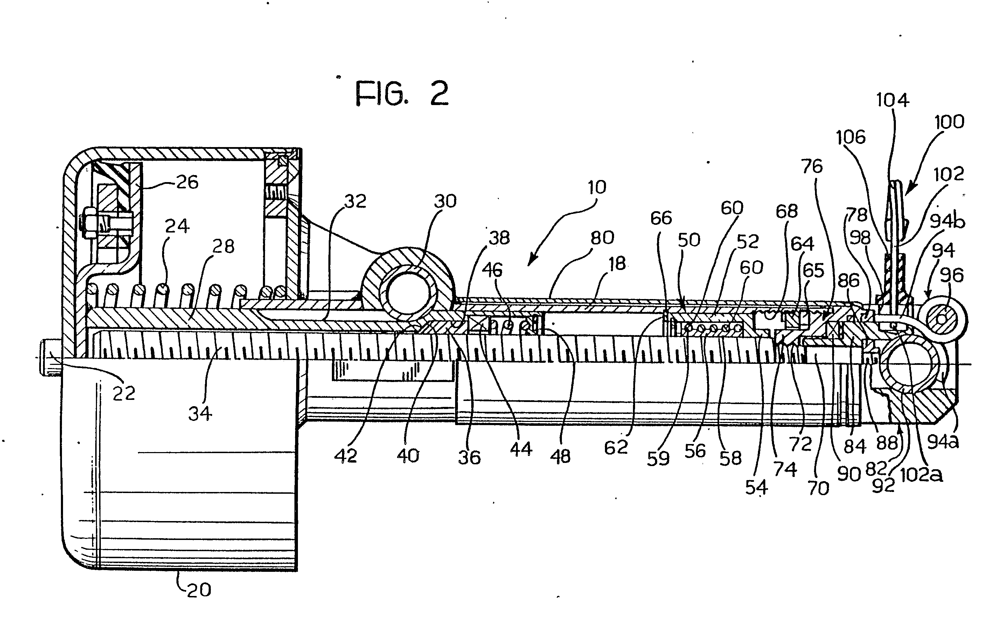

Referring now in detail to Figure 2, the actuator 10 comprises essentially a tubular cylindrical casing 18 to one end of which is fixed a cylinder 20 arranged to be supplied, through an inlet union 22, from a source of air under pressure.

In the cylinder 20 a piston 26 is sealingly slidable against the action of a helical compression spring 24. To the piston 26 is fixed coaxially a hollow shaft 28 which extends within the tubular casing 18. To this casing 18 is also fixed, close to the cylinder 20, an attachment bush 30 for the articulation of one of the arms 12a of the brake caliper 12. The attachment bush 30 projects into the cavity of the tubular casing 18 and slidably engages an axial flat 32 formed on the outer surface of the hollow shaft 28. Thus, the latter is locked against rotation relative to the tubular casing 18.

An externally-threaded rod is shown as 34, with its inner end extending coaxially in the hollow shaft 28 and its outer end projecting from the tubular casing 18 at the opposite side from the cylinder 20.

An internally-threaded stop member 36 is engaged on the threaded rod 34, and inserted slidably in an internal annular recess 38 formed at the end of the hollow shaft 28 opposite the piston 26. The stop member 36 has a frontal conical surface 40 facing a complementary frontal conical surface 42 of the recess 38. Preferably, the two frontal surfaces 40, 42 are provided with respective frontal coupling teeth, by means of which the annular stop member 36 is locked against rotation relative to the hollow shaft 28. The end face of the annular stop member 36 opposite the surface 40 bears against an axial rolling bearing 44 subject to the action of an axial helical compression spring 46 which acts against an annular stop 48 carried at the free end of the hollow shaft 28. The spring 46 urges the annular stop member 36 axially in the direction of the piston 26, so as to maintain the frontal surfaces 40, 42 in mutual engagement.

An annular friction member, generally indicated 50, is interposed coaxially between the tubular casing 18 and the threaded rod 34 close to the outer end of the latter. The friction member 50 comprises an external sleeve 52 which faces the internal wall of the tubular casing 18 and has an axial projection 54 at one end in sliding contact with the threading of the rod 34, and an internal sleeve 56 axially locked with respect to the sleeve 52 and facing the surface of the rod 34. The internal sleeve 56 has a series of axial slits, not shown in the drawings, so as to be radially contractable, and has a series of annular circumferential grooves 59 in its outer surface in each of which is engaged a resilient ring 60 tending to clamp the sleeve 58 against the rod 34.

The friction member 50 may move axially with the rod 34 for predetermined length of travel between a pair of stops 62, 64. The stop 62 is constituted by a resilient ring which engages an annular internal groove 66 formed in the internal surface of the tubular casing 18, while the stop 64 is formed by an externally-threaded ring which is screwed onto internal threading 68 at the free end of the tubular casing 18. The screwing or unscrewing of the threaded ring 64 relative to the casing 18 allows the amount of displacement of the friction member 50 to be varied according to the requirements of use. The locking of the ring 64 relative to the casing 18 in a predetermined position is effected by a set screw 65.

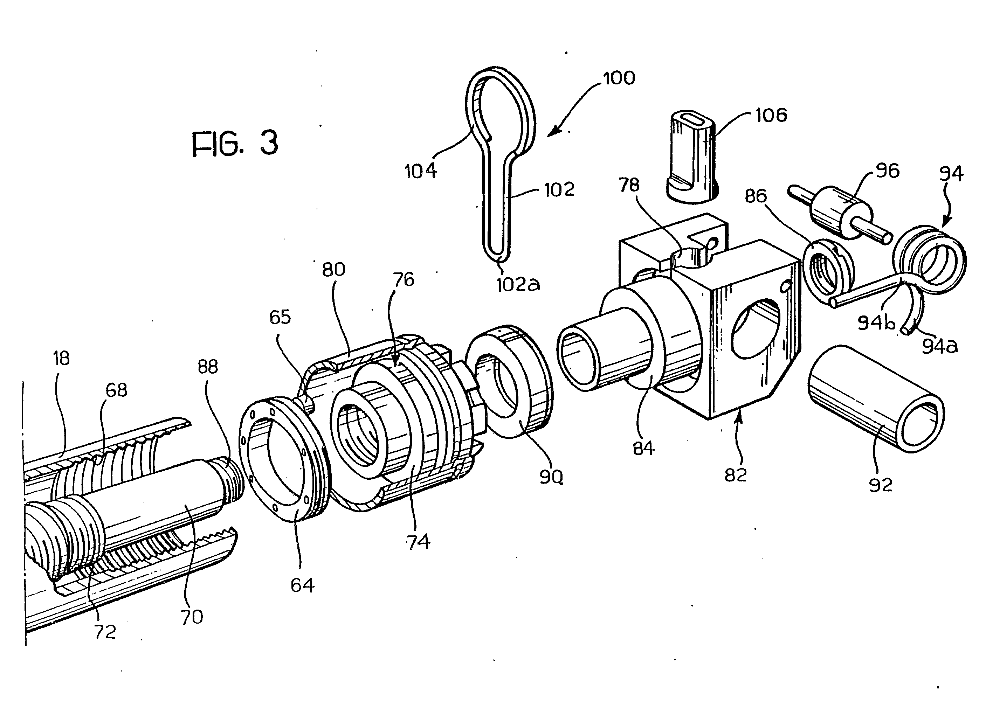

The threaded rod 34 has an axial stub portion 70 at its free end with an initial section with a thread 72. The thread 72 is engaged with an internally-threaded boss 74 of a sleeve 76 shown in detail in Figure 3. The sleeve 76 is provided, at its frontal face which faces outwardly of the tubular casing 18, with a ring of axial detents 78 the function of which will be clarified below. In addition, the side wall of the sleeve 76 is fixed rigidly to the outer end of a tubular guard 80 which surrounds the outer surface of the tubular casing 18 with clearance.

By 82 is shown a body in the general form of a sleeve with a tubular part 84 which is mounted on the stub end 70 of the rod 34 and is locked axially relative to the latter by means of a ring nut 86 screwed onto a terminal threaded tongue 88 of the rod 34. As is clearly seen in Figure 2, the tubular part 84 of the body 82 is inserted coaxially in the cavity of the sleeve 76, and a rolling bearing 90 is interposed between the two elements to allow the free rotation of the sleeve 76 relative to the body 82.

A transverse attachment bush 92, similar to the attachment bush 30, is fixed rigidly to the body 82 and serves for the connection of the other arm 12b of the brake caliper 12. Furthermore, the body 82 is provided with a hook member, indicated 94, the function of which is to unlock the sleeve 76, and hence the threaded rod 34, for rotation relative to the body 82. As illustrated in detail in Figures 2 and 3, the hook member 94 is formed from a pin spring which is wound around a cylindrical support 96 fixed transversely to the body 82, and has an arm 94a acting against the outer surface of the attachment bush 92. The other arm of the spring 94, indicated 94b, extends axially through a recess 98 in the upper part of the body 82 and engages the frontal detents 78 of the sleeve 76. A control member 100 is connected to the arm 94b and is formed from a bar 102 which is provided with an annular handle 104 and extends through a guide and protection sleeve 106 within the axial recess 98. The internal end of the bar 102, indicated 102a, is bent about the arm 94b of the spring 94. Thus, pulling the control member 100 outwardly, by means of the handle 104, causes the resilient lifting of the arm 94b of the spring 94 and, consequently, its disengagement from the frontal detents 78 of the sleeve 76.

The operation of the actuator described above is as follows.

The admission of compressed air into the cavity of the cylinder 20 through the inlet union 22 effects the displacement of the piston 26 towards the right with reference to Figure 2, and consequently the axial displacement of the hollow shaft 28 and the annular stop member 36, and hence the threaded rod 34. The friction member 50 is drawn axially by the rod 34 and is thus displaced from its position illustrated in Figure 2, in which the external sleeve 52 bears against the resilient stop-ring 62, to the end of travel position, in which the sleeve 52 is stopped against the ring 64. As a result of this displacement, the body 82 is removed from the free end of the tubular-casing 18, causing rotation of the arm 12b of the brake caliper 18 and hence the pressing of the friction shoes 14 against the wheel 16, effecting braking.

The interruption of the supply of compressed air to the cylinder 20 allows the spring 24 to bring the piston 26 and hence the rod 34, the friction member 50, and the body 82, back into the rest position of Figure 2, interrupting the braking action.

The actuator according to the invention is able to achieve automatically a continuous take-up of the play due to the wear of the friction shoes 14. Indeed, during operation of the actuator, at the end of the travel of the friction member 50, whenever the friction shoes 14 are no longer in braking contact with the wheel 16 because of wear, the rod 34 slides axially, sliding relative to the internal sleeve 56 of the friction member 50, so as to bring the shoes 14 into contact with the wheel 16 and thus apply the braking force.

When the actuator is deactivated, the rod 34 lies in a different axial position relative to the hollow shaft 28, being displaced outwardly relative to the latter, so as to take up the initial travel of the displacement. Indeed, during the initial return phase of the rod 34 towards the rest position of Figure 2, the friction member 50 is brought back, under the action of the spring 24, against the stop ring 62. In this position, the rod 34 is displaced axially relative to the friction member 50 by a value corresponding to the previous additional braking travel. The return travel of the piston 26 continuing, the rod 34 is locked axially by the friction member 50 while the tubular shaft 28 continues its displacement towards the left, sliding relative to the rod 34 and separating from the annular stop member 36. The helical spring 46 is then compressed and, due to its axial thrust, the stop member 36 is rotated, screwing onto the threaded rod 34 so as to renew the engagement between the coupling surfaces 40, 41.

Clearly, this cycle of operation is repeated automatically every time a reduction in the thickness of the brake shoes 14 occurs.

When it is necessary to replace the brake shoes 14, the initial configuration illustrated in Figure 2 must be restored, bringing the threaded rod 34 back into the axial position in which it is completely inserted in the tubular shaft 28. To do this, it suffices to free the sleeve 76 for rotation relative to the body 82 by disengaging the arm 94a of the spring 94 from the frontal teeth 78 by means of the control member 102. Due to this disengagement, and by means of axial thrust imparted from outside the body 82, the screw 34 is screwed relative to the stop member 36, returning to the initial condition of Figure 2.

According to the variant illustrated in Figure 4, the actuator according to the invention is provided with a spring-operated device which acts on the piston 26 to achieve parking or emergency braking automatically. As illustrated in detail in this drawing, the cylinder 20 forms an auxiliary chamber 110 behind the chamber in which the piston 26 is movable, an auxiliary piston 112 being slidable in this auxiliary chamber and to which is fixed a shaft 114 which bears against the surface of the piston 26.

The auxiliary chamber 110 is connected permanently to the source of air under pressure which supplies the actuator.

A helical compression spring 115 inserted in the cavity of a bell-shaped body 116 rigidly connected to the end of the cylinder 20 bears against the face of the auxiliary piston 112 opposite the piston 26.

The normal operation of the actuator according to this variant is exactly the same as that described above. In the presence of pressure in the auxiliary chamber 110, the piston 112 is maintained in its rest position illustrated in Figure 4, compressing the spring 115.

When the pressure in the auxiliary chamber 110 is reduced due to an intentional or accidental breaking of the connection between the cylinder 20 and the source of air under pressure, the spring 115 assumes its undeformed rest condition, pressing axially against the piston 112 and thus automatically closing the brake caliper 12 due to the displacement of the piston 26 and hence the threaded rod 34.

In order to cancel the action of the spring 115, and thus achieve the opening of the brake caliper 12, one can simply proceed to restore automatically or manually the connection between the source of the supply or air under pressure and the auxiliary chamber 110. In the second case, it suffices to operate the control member 100 so as to disengage the arm 94b of the spring 94 from the frontal detents 78 of the sleeve 76, thus allowing the screw 34 to be screwed relative to the annular stop member 36. The correct axial position of the screw 34 relative to the hollow shaft 28 will be restored at the moment of the first braking operation of the actuator, as in the case of the taking up of the wear of the shoes 14 in the manner described above.

## Claims

1. Actuator for controlling the brakes of railway vehicles and the like, comprising a tubular casing (18) defining at one end a cylinder (20) in which is slidable, under the effect of a fluid under pressure and against the action of resilient return means (24); a piston (26) carrying a hollow shaft (28) in which a rod (34) for operating the brake means (14) is coupled axially, and an automatic device for taking up play which is associated with the rod (34) and acts so as to vary the axial position of the rod (34) relative to the hollow shaft (28) following wear of the brake means (14), wherein the hollow shaft (28) and the rod (34) are locked against rotation relative to the tubular casing (18), and the rod (34) is threaded externally and an internally-threaded stop member (36) is engaged thereon with a frontal coupling part (40) cooperating with a complementary frontal coupling part (42) of the hollow shaft (28) to lock the stop member (36) against rotation relative to the hollow shaft (28), resilient return means (46) being provided for restoring the engagement between the coupling parts (40, 42) by means of the screwing of the stop member (36) on the threaded rod (34) following axial separation of the coupling parts (40, 42), characterised in that:

— an annular friction member (50) is interposed between the tubular casing (18) and the threaded rod (34), which acts on the threaded rod (34) and is rigid therewith for sliding relative to the tubular casing (18), through a predetermined length of travel during operation of the actuator (10); stop means (64) carried by the casing (18) being prearranged to stop the annular friction member (50) at the end of the predetermined length of travel and allow possible axial sliding of the threaded rod (34) relative to the hollow shaft (38), and

— manually operable releasing means (100) are associated, in a way known per se, with the free end (70) of the threaded rod (34) to free the latter for rotation.

2. Actuator according to Claim 1, characterised in that the annular friction member (50) comprises an external sleeve (52) facing the internal surface of the tubular casing (18), a radially contractable internal sleeve (58) in contact with the surface of the threaded rod (34) and axially rigid with the external sleeve (52), and a series of resilient rings interposed between the external sleeves (52) and the internal sleeve (58) and acting so as to clamp the latter against the surface of the threaded rod (34).

3. Actuator according to Claim 2, characterised in that the external sleeve (52) has an axial projection (54) of reduced diameter in sliding contact with the surface of the threaded rod (34).

4. Actuator according to Claim 1, characterised in that the stop means of the annular friction member (50) are axially adjustable relative to the tubular casing (18).

5. Actuator according to Claim 4, characterised in that the stop means include an externally threaded ring (62) which engages an internally threaded portion (68) formed at the end of the tubular casing (18) opposite the cylinder (20).

6. Actuator according to one or more of the preceding claims, characterised in that the tubular casing (18) and the threaded rod (34) are provided, adjacent the cylinder (20) and at the opposite end (70) to the cylinder (20) respectively, with first and second annular attachment members (30, 92) for the connection of a brake caliper (12), and in that the hollow shaft (28) has an outer axial flat (32) which slidably engages the first annular attachment element (30).

7. Actuator according to Claim 6, characterised in that second annular attachment element (92) is carried by a body (82) coupled axially with the external end (70) of the threaded rod (34) and carrying a hook member (94b) to which is connected a manual control member (100), and in that there is interposed between the body (82) and the tubular casing (18) a sleeve (76) coupled for rotation with the threaded rod (34) and having a front stop part (78) cooperating with the hook member (94b) to lock the threaded rod (34) against rotation; the disengagement of the hook member (94b) from the frontal stop part (78) allowing the screwing of the threaded rod (34) relative to the annular stop member (36).

8. Actuator according to Claim 7, characterised in that the sleeve (76) has a frontal ring of axial detents (78) and the hook member is constituted by a pin spring (94) wound around a transverse support (96) fixed to the body (82), which has a first arm (94a) acting against the second annular attachment member (92) and a second arm (94b) extending substantially axially to engage the frontal ring of axial detents (78); the control member having a hooked end (102a) cooperating with the second arm (94b) of the spring (94).

9. Actuator according to Claim 7, or Claim 8, characterised in that the sleeve (76) is fixed to an outer tubular guard member (18) surrounding the tubular casing (18) and telescopically slidable relative thereto.

10. Actuator according to any of the preceding claims, characterised in that it is further provided with a spring-operated device (110, 112, 115) which acts on the piston (26) to achieve parking or emergency braking automatically.

**Patentansprüche**

1. Stellglied für die Steuerung der Bremsen von Eisenbahnwagen, oder ähnlichem, mit einem rohrförmigen Gehäuse (18), das an einem Ende einen Zylinder (20) bildet, in dem unter der Wirkung eines unter Druck stehenden Mediums und gegen die Wirkung einer elastischen Rückstellvorrichtung (24) ein Kolben (26) verschiebbar ist, der eine Hohlwelle (28) trägt, in der eine Stange (34) für die Betätigung der Bremsvorrichtung (14) axial gekuppelt ist, sowie eine automatische Vorrichtung für die Beseitigung des Spiels besitzt, die der Stange (34) zugeordnet ist und so arbeitet, daß sie die axiale Stellung der Stange (34) relativ zur Hohlwelle (28) verändert, indem sie der Abnützung der Bremsvorrichtung (14) folgt, wobei die Hohlwelle (28) und die Stange (34) gegen eine Drehung relativ zum rohrförmigen Gehäuse (18) verriegelt sind, und die Stange (34) außen mit einem Gewinde versehen ist und ein Innengewinde-Anschlagteil (36) damit im Eingriff steht, wobei ein Kupplungsstirnteil (40) mit einem komplementären Kupplungsstirnteil (42) der Hohlwelle (28) zusammenwirkt, um den Anschlagteil (38) gegen eine Drehung relativ zur Hohlwelle (28) zu verriegeln, wobei eine elastische Rückstelleinrichtung (46) vorgesehen ist, um den Eingriff zwischen den Kupplungsteilen (40, 42) durch ein Verschrauben des Anschlagteils (36) auf der Gewindestange (34) wieder herzustellen, wobei dies auf eine axiale Trennung der Kupplungsteile (40, 42) folgt, dadurch gekennzeichnet, daß ein ringförmiger Reibungsteil (50) zwischen dem rohrförmigen Gehäuse (18) und der Gewindestange (34) liegt, der auf die Gewindestange (34) wirkt und damit starr verbunden ist, um relativ zum rohrförmigen Gehäuse (18) über einen vorgegebenen Weg während der Arbeitsweise des Stellglieds (10) zu gleiten; wobei eine Anschlagvorrichtung (64), die vom Gehäuse (18) getragen wird, voreingestellt wird, um den ringförmigen Reibungsteil (50) am Endes des vorgegebenen Wegs anzuhalten und eine mögliche axiale Verschiebung der Gewindestange (34) relativ zur Hohlwelle (38) zu ermöglichen, und eine händisch betätigbare Freigabevorrichtung (100) auf eine für sich bekannte Art dem freien Ende (70) der Gewindestange (34) zugeordnet ist, um diese für eine Drehung freizugeben.

2. Stellglied gemäß Anspruch 1, dadurch gekennzeichnet, daß der ringförmige Reibungsteil (50) eine äußere Buchse (52) besitzt, die der Innenfläche des rohrförmigen Gehäuses (18) gegenüberliegt, eine radial zusammenschiebbare Innenbuchse (58) enthält, die mit der Oberfläche der Gewindestange (34) in Berührung steht und axial mit der äußeren Buchse (52) befestigt ist, sowie eine Reihe von elastischen Ringen besitzt, die zwischen den äußeren Buchsen (52) und der inneren Buchse (58) sitzen und dazu dienen, um die innere Buchse (58) gegen die Oberfläche der Gewindestange (34) zu klemmen.

3. Stellglied gemäß Anspruch 2, dadurch gekennzeichnet, daß die äußere Buchse (52) einen axialen Vorsprung (54) mit verkleinertem Durchmesser besitzt, der mit der Oberfläche der Gewindestange (34) gleitend in Berührung steht.

4. Stellglied gemäß Anspruch 1, dadurch gekennzeichnet, daß der Anschlagteil des ringförmigen Reibungsteils (50) axial relativ zum rohrförmigen Gehäuse (18) einstellbar ist.

5. Stellglied gemäß Anspruch 4, dadurch gekennzeichnet, daß der Anschlagteil einen Außengewindering (62) besitzt, der in einen Innengewindeteil (68) eingreift, der am Ende des rohrförmigen Gehäuses (18) gegenüber dem Zylinder (20) ausgebildet ist.

6. Stellglied gemäß einem oder mehreren der bisherigen Ansprüche, dadurch gekennzeichnet, daß das rohrförmige Gehäuse (18) und die Gewindestange (34) neben dem Zylinder (20) und am entgegengesetzten Ende (70) zum Zylinder (20) vorgesehen sind, wobei erste und zweite ringförmige Befestigungsteile (30, 92) für die Verbindung mit einem Bremsgreifer (12) vorgesehen sind, und wobei die Hohlwelle (28) eine äußere Axialefläche (32) besitzt, die in das erste ringförmige Befestigungselement (30) verschiebbar eingreift.

7. Stellglied gemäß Anspruch 6, dadurch gekennzeichnet, daß das zweite ringförmige Befestigungselement (92) von einem Körper (82) getragen wird, der axial mit dem äußeren Ende (70) der Gewindestange (34) gekuppelt ist und einen Hakenteil (94b) trägt, an dem ein Handsteuerteil (100) befestigt ist, und daß zwischen dem Körper (82) und dem rohrförmigen Gehäuse (18) eine Buchse (76) liegt, die für eine Drehung mit der Gewindestange (34) gekoppelt ist und einen Anschlagstirnteil (78) bestizt, der mit dem Hakenteil (94b) zusammenarbeitet, um die Gewindestange (34) gegen eine Drehung zu verriegeln; wobei das Ausrasten des Hakenteils (94d) aus dem Anschlagstirnteil (78) des Verschrauben der Gewindestange (34) relativ zum ringförmigen Anschlagteil (36) ermöglicht.

8. Stellglied gemäß Anspruch 7, dadurch gekennzeichnet, daß die Buchse (76) einen Stirnring von axialen Rasten (78) besitzt und der Hakenteil von einer Zapfenfeder (94) gebildet wird, die um eine Querhalterung (96) geschlungen ist, die auf dem Körper (82) befestigt ist, einen ersten Arm (94a) besitzt, der gegen den zweiten ringförmigen Befestigungsteil (92) wirkt, und einen zweiten Arm (94b) besitzt, der sich im wesentlichen axial erstreckt, um mit dem Stirnring von axialen Rasten (78) im Eingriff zu stehen; wobei der Steuerteil ein Hakenende (102a) besitzt, das mit dem zweiten Arm (94b) der Feder (94) zusammenwirkt.

9. Stellglied gemäß Anspruch 7 oder 8, dadurch gekennzeichnet, daß die Buchse (76) an einem äußeren rohrförmigen Schutzteil (18) befestigt ist, der das rohrförmige Gehäuse (18) umschließt und relativ dazu teleskopartig verschiebbar ist.

10. Stellglied gemäß jedem der bisherigen Ansprüche, dadurch gekennzeichnet, daß es weiters mit einer federbetätigten Einrichtung (110, 112, 115) versehen ist, die auf den Kolben (26) wirkt, um automatisch eine Feststellbremsung oder eine Notbremsung zu erreichen.

**Revendications**

1. Dispositif d'actionnement servant à commander les freins de véhicules ferroviaires et analogues, comportant un carter tubulaire (18) définissant, au niveau d'une extrémité, un cylindre (20) dans lequel peut coulisser, sous l'action d'un fluide sous pression et à l'encontre de l'action de moyens de rappel élastiques (24), un piston (26) portant un arbre creux (28) dans lequel une tige (34) servant à actionner les moyens formant frein (14) est accouplée axialement, et un dispositif automatique de rattrapage de jeu, qui est associé à la tige (34) et agit de manière à modifier la position axiale de la tige (34) par rapport à l'arbre creux (28), en fonction de l'usure des moyens formant frein (14), et dans lequel l'arbre creux (28) et la tige (34) sont bloqués contre toute rotation par rapport au carter tubulaire (18), et la tige (34) est filetée extérieurement et un organe de butée taraudé (36) engrène avec cette tige avec une partie d'accouplement frontale (40) coopérant avec une partie d'accouplement frontale complémentaire (42) de l'arbre creux (28) de manière à bloquer l'organe de butée (36) contre toute rotation par rapport à l'arbre creux (28), des moyens de rappel élastiques (46) étant prévus de manière à rétablir l'appui entre les parties d'accouplement (40, 42) par vissage de l'organe de butée (36) sur la tige filetée (34) à la suite d'une séparation axiale des parties d'accouplement (40, 42), caractérisé en ce que:

— entre le carter tubulaire (18) et la tige filetée (34) se trouve interposé un organe de friction annulaire (50) qui agit sur la tige filetée (34) et est solidaire de cette dernière vis-à-vis d'un glissement par rapport au carter tubulaire (18), sur une course de déplacement prédéterminée pendant le fonctionnement du dispositif d'actionnement (10); des moyens de butée (64) portés par le carter (18) étant agencés d'avance de manière à bloquer l'organe de friction annulaire (50) à la fin de la course de déplacement prédéterminée et à permettre un glissement axial possible de la tige filetée (34) par rapport à l'arbre creux (38), et

— des moyens de déblocage (100) pouvant être actionnés manuellement sont associés, d'une manière connue, *en soi*, à l'extrémité libre (70) de la tige filetée (34) de manière à libérer cette dernière pour lui permettre de tourner.

2. Dispositif d'actionnement selon la revendication 1, caractérisé en ce que l'organe de friction annulaire (50) comporte un manchon extérieur (52) faisant face à la surface intérieure du carter tubulaire (18), un manchon intérieur (58) pouvant se contracter radialement et qui est en contact avec la surface de la tige filetée (34) et est solidaire axialement du manchon extérieur (52), et une série de bagues élastiques interposées entre le manchon extérieur (52) et le manchon intérieur (58) et agissant de manière à serrer ce dernier contre la surface de la tige filetée (34).

3. Dispositif d'actionnement selon la revendication 2, caractérisé en ce que le manchon extérieur (52) comporte une partie saillante axiale (54) de diamètre réduit qui est en contact coulissant avec la surface de la tige filetée (34).

4. Dispositif d'actionnement selon la revendication 1, caractérisé en ce que les moyens de butée de l'organe de friction annulaire (50) sont réglables axialement par rapport au carter tubulaire (18).

5. Dispositif d'actionnement selon la revendication 4, caractérisé en ce que les moyens de butée incluent une bague filetée extérieurement (62) qui s'engage dans une partie taraudée (68) ménagée sur l'extrémité du carter tubulaire (18), située à l'opposé du cylindre (20).

6. Dispositif d'actionnement selon une ou plusieurs des revendications précédentes, caractérisé en ce que le carter tubulaire (18) et la tige filetée (34) comportent, respectivement au voisinage du cylindre (20) et à l'extrémité (70) située à l'opposé du cylindre (20), des premier et second organes annulaires de fixation (30, 92) servant au raccordement d'un étrier de frein (12), et que l'arbre creux (68) comporte un méplat axial extérieur (32), qui contacte, avec possibilité de glissement, le premier organe annulaire de fixation (30).

7. Dispositif d'actionnement selon la revendication 6, caractérisé en ce que le second organe annulaire de fixation (92) est porté par un corps (82) accouplé axialement à l'extrémité extérieure (70) de la tige filetée (34) et portant un organe en forme de crochet (94b), auquel est raccordé un organe manuel de commande (100), et qu'entre le corps (82) et le carter tubulaire (18) se trouve interposé un manchon (76) accouplé à la rotation à la tige filetée (34) et possédant une partie frontale de butée (78) coopérant avec l'organe en forme de crochet (94b) de manière à bloquer la tige filetée (34) contre toute rotation, le dégagement de l'organe en forme de crochet (94b) vis-à-vis de la partie frontale de butée (78) permettant le vissage de la tige filetée (34) par rapport à l'organe de butée annulaire (36).

8. Dispositif d'actionnement selon la revendication 7, caractérisé en ce que le manchon (76) comporte un ensemble annulaire frontal d'organes d'arrêt axiaux (78) et que l'organe en forme de crochet est constitué par un ressort (94) en épingle, enroulé autour d'un support transversal (96) fixé au corps (82) et qui possède une première branche (94a) en appui contre le second organe annulaire de fixation (29) et une seconde branche (94b) s'étendant essentiellement axialement de manière à contacter l'ensemble annulaire frontal des organes d'arrêt axiaux (78), l'organe de commande possédant une extrémité en forme de crochet (102a) coopérant avec la seconde branche (94b) du ressort (94).

9. Dispositif d'actionnement selon la revendication 7 ou 8, caractérisé en ce que le manchon (76) est fixé à un organe tubulaire de protection (80) entourant le carter tubulaire (18) et pouvant glisser de façon télescopique sur ce dernier.

10. Dispositif d'actionnement selon l'une quelconque des revendications précédentes, caractérisé en ce qu'il comporte en outre un dispositif (110, 112, 115) qui est actionné par un ressort et qui agit sur le piston (26) de manière à réaliser automatiquement un freinage de stationnement ou de secours.

FIG. 1

FIG. 4

# FIG. 2

0 084 294

FIG. 3

0 084 294